# EUROPEAN PATENT SPECIFICATION

(11) **EP 4 077 177 B1**
(45) Date of publication and mention of the grant of the patent: **14.10.2026**
(21) Application number: 20823863.4
(22) Date of filing: 16.12.2020
(51) Int. Cl.: B65G 47/51, B65G 54/02, B65G 47/71, B65G 47/84

(54) **CONVEYING APPARATUS WITH BUFFERING UNIT**
FÖRDERVORRICHTUNG MIT PUFFEREINHEIT
APPAREIL DE TRANSPORT AVEC UNITÉ DE MISE EN MÉMOIRE TAMPON

(30) Priority: 16.12.2019 EP 19315160
(43) Date of publication of application: 26.10.2022
(73) Proprietor: Forspective, 36000 Châteauroux (FR)
(72) Inventor: DUPERRAY, Philippe, 36000 Châtereauroux (FR)
(74) Representative: BiiP bv
(86) International application number: PCT/EP2020/086481
(87) International publication number: WO 2021/122786

(56) References cited:
- EP-A1- 0 216 409
- EP-A1- 0 216 409
- EP-A1- 3 059 190
- EP-A1- 3 059 190
- EP-A1- 3 301 044
- EP-A1- 3 301 044
- WO-A1-2014/196862
- WO-A1-2014/196862
- DE-B3- 102006 025 090
- DE-B3- 102006 025 090
- FR-A1- 2 988 709
- FR-A1- 2 988 709

## Description

### TECHNICAL FIELD

The present disclosure relates generally to conveying apparatus; and more particularly relates to a conveying apparatus having multi-lane buffering unit.

### BACKGROUND

In the packaging industry, generally, the packaging of containers, such as cans, bottles, cups, and the like, inside various secondary packages involves multiple steps namely; receiving incoming beverage containers from in-feed towards an out-feed from where these containers are picked up for packaging purposes. Before being picked up, these containers must be arranged into groups so that a predetermined number (such as 2x3, 3x4, 3x6, etc) of the beverage containers arranged in a predetermined order can be easily loaded into an appropriate shipping package.

It has been noticed that due to certain reasons such as brief interruptions, process failures, and due to asynchronous movements of the infeed supply, the packaging at the out-feed may be halted and therefore the manufacturing unit and / or infeed may need to be temporarily stopped in such situation. However, in such situations, the manufacturing units is often left with a considerable volume of raw material, which, often has to be simply disposed off, once the manufacturing unit is restarted. Further, the containers already supplied through the infeed needs to be handled such that they are not damaged. Therefore, balancing the flow between an upstream process or in-feed station and a downstream process or out-feed station is important.

For this reason, it is highly desirable that a buffering means be provided to compensate for any difference in the number of containers produced and the number to be packed. The buffering means may generally be described as accumulating and / or storage means which is utilized to accumulate articles when the capacity of the packaging station is such that it cannot handle the number of articles being fed by the infeed station.

Various types of buffering means have been proposed. Conventionally, the use of various kind of buffer storage devices for such tasks is known. U.S. Pat. Nos. 4,964,498 disclose conveyors having side by side vertical storage buffers. U.S. Pat. No. 5,176,242 discloses two buffer magazines 12, 32 positioned one after the other.

U.S. Pat. No. 4,561,819 discloses a conveyor magazine having the shape of a vertical stack for storing articles. However, such a conveyor magazine does not include conveyors on each level of the magazine to load and withdraw articles and rather relies on external rollers to load and withdraw articles.

However, all such buffer means requires a great deal of floor space, which is not preferred. Due to space limitations and the cost of operating conveying lines, the efficiency of a conveyor system is a substantial consideration. Thus, buffer systems are often required to store articles on a conveyor system itself to maximize throughput efficiency.

Accordingly, numerous efforts have been imparted to produce conveyor apparatus which provide one or more buffering means that operate on the conveyor itself so as to lower the cost of these buffering means while improving their space efficiency. Generally, the known device comprises several buffering tracks / multiple parallel conveyor lanes used for accumulation, which are driven independently from each other to move products continuously along a conveying track to the out-feed station.

U.S. Pat. No. 7,775,344 B1 discloses apparatus having accumulators with multiple lanes that are arranged in various spiral configurations. These apparatuses further include a diverter at the infeed end and a merger at the discharge end. However, such diverter needs to be constantly moved to select the accumulating lane where products can be forwarded. Therefore, such devices would likely also be subject to upstream and downstream backups during operation.

WO Publication No. 2012078661 A1 tries to resolve the above problem by adding backups before and after each lane in the form of additional accumulators directly upstream and downstream of the lanes. However, such attempts to address these backup issues are extremely complex solutions. Further since, each of the lanes is independently driven, this also adds to the complexity of the apparatus and is therefore not preferred.

US Pat. No. US9409728B2, resolves this by providing a case buffering apparatus that include a receiving or infeed vertical shuttle system, a matrix of horizontal accumulation conveyors (buffer), and a discharge vertical shuttle system. The apparatus further includes a vertical case shuttle system on either side of the vertical storage rack system for loading and unloading SKUs. The vertical case shuttle systems each include a plurality of vertical transports or shuttles that are able to move horizontally and vertically to deliver or pick the case from the appropriate horizontal buffer conveyor. The shuttles are able to load and unload cases at a single location within the vertical case shuttle system.

WO Publication No. 2014196862 A1 discloses a conveying apparatus comprising a buffering unit extending between a receiving end towards an output end, the buffering unit comprising:
a base conveyor;
a distributing unit adapted to distribute a at least one incoming line of articles received at the receiving end into a plurality of buffering lanes configured onto the base conveyor,
an accumulator unit extending away from the distributing unit through the plurality of buffering lanes, the accumulator unit adapted to accumulate the articles received through the plurality of buffering lanes into a at least one output lane.

However, these all known apparatus have certain shortcomings, Firstly, the use of diverters at the infeed end requires a control system to select the lane where the article has to be buffered which adds to the complexity of the system. Moreover, none of these apparatuses provides a solution to convert the multiple lanes into a single or a dedicated number of lanes at the discharge end of the buffer conveyors while avoiding any collision / damage to the articles.

Accordingly, as can be seen from the foregoing discussion, it is an object of the present invention to provide a buffering conveying apparatus which while having a compact footprint, allows the possibility of buffering the infeed supply in a progressive manner and arranging the articles in a single or a plurality of lanes at the outfeed thereof. Thus, in the context of the above, a buffering conveying apparatus is desired, which while being cost effective and easy to implement allows to carry out progressive and automated buffering.

Further, it is an object of the present invention to provide contactless buffering in order to limit or even avoid any pushing pressure on the articles and in order to enable conveying articles that do not have the conventional cylindrical shape of round cans, round bottles, etc,, or that may be manufactured from a variety of materials including paper, foils, thin plastic sheets etc.

It is also an object of the present invention to provide a buffering conveying apparatus that is optionally able to buffer from more than one infeed lane and optionally able to outfeed to several lanes simultaneously, which opens also the possibility to outfeed grouped articles.

It is further also an object of the present invention to provide a buffering conveying apparatus enabling buffering in FIFO (first-in-first-out) mode or non-FIFO mode.

Additionally, it is an object of the present invention to provide a buffering conveying apparatus enabling separating articles, then buffering followed by grouping, as well as separating articles, then grouping followed by buffering groups.

### SUMMARY

In an aspect of the invention, a conveying apparatus is disclosed comprising a buffering unit extending between a receiving end towards an output end, the buffering unit comprising:
a base conveyor:
a distributing unit adapted to distribute a at least one incoming line of articles received at the receiving end into a plurality of buffering lanes configured onto the base conveyor, said distributing unit comprising a first closed loop track positioned at the receiving end of the base conveyor, the first closed loop track comprising a plurality of distributing lugs movingly configured thereon;
an accumulator unit extending away from the distributing unit through the plurality of buffering lanes, the accumulator unit adapted to accumulate the articles received through the plurality of buffering lanes into a at least one output lane, said accumulator unit comprising a second closed loop track positioned on the base conveyor and oriented generally transversally to the first closed loop track, the second closed loop track comprising a plurality of accumulating lugs movingly configured thereon;
wherein the closed loop tracks are powered by a linear motor and wherein articles received at the buffering unit are each supported and moved along with one of the distributing lugs and dropped within one of the buffering lanes such that said articles are progressively distributed into a the plurality of buffer lanes towards the accumulator unit wherein the corresponding articles are picked by one of the accumulating lugs such that the one or more output lanes of articles are received at the output end.

The buffering unit is adapted to temporarily buffer the articles thereupon, when the rate at which an incoming supply of the articles is received from the infeed station is more than a rate of discharge at the out-feed station.

Optionally, the distributing unit further includes a separating means adapted to position one of the articles received at the receiving end towards one of the supporting lugs (also called distributing lugs throughout this text) such that the article is supported by and moved along with the corresponding supporting lug across the first closed loop track. Such separating means may comprise a star-wheel a known in the art, or may comprise sensors electronically controlling the supporting lugs to pick one article at the receiving end.

Further, optionally the distributing unit includes an alignment unit configured onto a distal side of the first closed loop track, positioned generally transversally to the base conveyor and generally parallel to a longitudinal direction of the first closed loop track. The alignment unit includes a plurality of distributing gates each aligned with one of the pluralities of buffering lanes. The alignment unit may enhance buffering at high speed, and enhance alignment of slippery products. It cooperates with the supporting lugs to align articles released by the lugs.

The accumulator unit is generally adapted to accumulate the articles received through the plurality of buffering lanes into at least one output lane. The accumulator unit includes a second closed loop track oriented generally transversally to the first closed loop track. The second closed loop track includes a plurality of accumulating lugs movingly configured thereon.

Optionally, the accumulator unit further includes a guiding unit positioned generally parallel to a longitudinal direction of the second closed loop track. The guiding unit comprising a plurality of accumulating gates each aligned with one of the buffering lanes and adapted to receive the articles there through and deliver towards one of the accumulating lugs such that article is supported by and moved along with the corresponding accumulating lug across the second closed loop track towards the output lane at the outfeed end.

Said first and/or second closed loop track may be preferably positioned eccentrically with respect to the base conveyor.

In operation, the infeed article supply is received at the buffering unit where each of the article is supported and moved along with one of the supported lugs and dropped within one of the buffering lanes through the buffering unit such that the article supply is progressively delivered into the plurality of buffer lanes towards the accumulator unit. Further, the accumulator unit is adapted to receive the articles through one or more accumulating gates and selectively guides the corresponding article along one of the accumulating lugs towards the output lane such that a single output lane of the articles is received at the output end or in case of several output lanes that each article is received at the appropriate output lane. In the latter case, the articles may be immediately grouped over these several lanes.

Optionally, the conveying apparatus further includes a grouping unit extending away from the buffering unit adapted to group the outfeed supply received at the output station. The grouping unit is adapted to distribute a single outfeed lane of articles received from the buffering unit and then group them into a predetermined arrangement onto an outfeed conveyor having a plurality of grouping lanes. The grouping unit includes a third closed loop track comprising a plurality of grouping lugs movingly configured thereon. Such third closed loop track may be positioned eccentrically with respect to the base conveyor. The grouping unit further may optionally include a second separating means, e.g. a star-wheel, configured to position at least one of the articles along one of the grouping lugs such that the article is supported by and moved along with the corresponding grouping lug across the third closed loop track. The grouping unit furthermore includes a pair of parallel grouping tracks extending away from the third closed loop track, each positioned on one side of the outfeed conveyor. The pair of parallel grouping tracks includes a plurality of pairs of grouping movers connected to each other through a longitudinal bar.

Typically, a single lane outfeed article supply is received at the grouping unit where each of the articles is supported and moved along with one of the grouping lugs and dropped within one of the grouping lanes in accordance to the desired predetermined arrangement. Further, the plurality of grouping movers is moved in such a way that at least one of the longitudinal bar acts as a front bar and at least one of the other longitudinal bar acts as a back bar so as to form a group of articles of predetermined arrangement there between.

Possibly, the plurality of buffer lanes may be separate lanes configured onto the base conveyor.

Alternatively, the plurality of buffer lanes may be separate conveyors parallelly arranged together.

Possibly, the buffering unit includes a first movement mechanism for moving the plurality of supporting lugs onto the first closed loop track.

Further possibly, the first movement mechanism includes a plurality of support movers movingly configured onto the first closed loop track, each of the support movers adapted to movingly engage at-least one of the pluralities of supporting lugs.

Yet further possibly, the buffering unit includes a second movement mechanism for moving the plurality of accumulating lugs onto the second closed loop track.

Yet furthermore possibly, the second movement mechanism includes a plurality of accumulating movers movingly configured onto the second closed loop track, each of the second movers adapted to movingly engage at-least one of the plurality of second supporting lugs.

Particularly, the alignment unit is a diverting structure having a plurality of horizontally configured alignment gates, each aligned with one of the buffering lanes.

Further, each of the alignment gate is configured in such a way that the article moves to a next gate only when a buffer lane to a previous gate is filled completely, due to eccentric position of the first closed loop track and the alignment unit.

Optionally, the accumulator unit is a diverting structure having a plurality of horizontally configured accumulating gates, each aligned with one of the buffering lanes.

Further optionally, each of the accumulating gate configured in such a way that the article is received from each of the buffer lanes such that the buffer lanes are emptied progressively.

Yet further optionally, each of the diverting structures is made in the form of longitudinal bar having a plurality of spaced apart branches forming the respective alignment gates / accumulating gates, aligned with one of the plurality of buffer lanes.

Possibly, each of the supporting lug is generally a supporting means having a shape in accordance to the shape of the article at a contact portion thereof so as to support and move at least one of the articles.

Possibly, the conveyor apparatus further comprising a control unit for optimizing the movement of each of the closed loop tracks, the base conveyor, the outfeed conveyor, the plurality of movers, and therefore the corresponding lugs and the moving article.

Further possibly, the control unit includes one or more sensors, one or more input unit, a processor unit and an output unit.

In yet another aspect of the invention, a method of buffering an incoming supply of articles onto the conveying apparatus of current disclosure, is provided. The method includes receiving one or more infeed supply of articles at the receiving end of the base conveyor. The method further includes positioning each of the articles of infeed supply towards the buffering unit where it is supported by and moved along at least one of the supporting lugs (also called distributing lugs) across the first closed loop track.

The method furthermore includes dropping the article away from the supporting lugs into one of the desired buffer lanes through the corresponding alignment gate association therewith. Additionally, the method includes receiving each of the articles from each of the buffer lanes at one of the accumulating lugs through the associated accumulating gate such that the article is supported therewith and move along the accumulating lugs towards a single lane outfeed supply.

Additionally, the method includes receiving the single outfeed supply at the grouping unit for forming a group of articles of a desired predetermined arrangement.

Possibly, the dropping of the articles from the supporting lug is determined by the control unit on the basis of an input from a user and / or input from the one or more sensors.

Alternatively, the dropping of the articles is performed in accordance with the inertia of the moving article such that the article is dropped towards a buffer lane having a space vacant for enabling a movement therein.

In the context of the present invention, the closed loop tracks as used in the buffering unit, as well as in the grouping unit, may have any type of circular shape, e.g. circular, elliptic, oval, or extending more longitudinally as shown in the drawings.

With regards to the grouping unit, person skilled in the art will appreciate that a grouping unit as described throughout this whole text may be a stand-alone unit, i.e. mounted and operating without a buffering unit preceding it.

The details of one or more implementations are set forth in the accompanying drawings and the description below. Other aspects, features and advantages of the subject matter disclosed herein will be apparent from the description, the drawings, and the claims.

### BRIEF DESCRIPTION OF THE DRAWINGS

FIG. 1 illustrates a schematic diagram representing a conveying apparatus in accordance with a preferred embodiment of the present disclosure;
FIG. 2 illustrates a schematic diagram representing a conveying apparatus, in accordance with a preferred embodiment of the present disclosure;
FIG. 3 illustrates a front view diagram representing an exemplary buffer unit, in accordance with a preferred embodiment of the present disclosure;
FIG. 4 illustrates an exemplary closed loop track, in accordance with a preferred embodiment of the present disclosure;

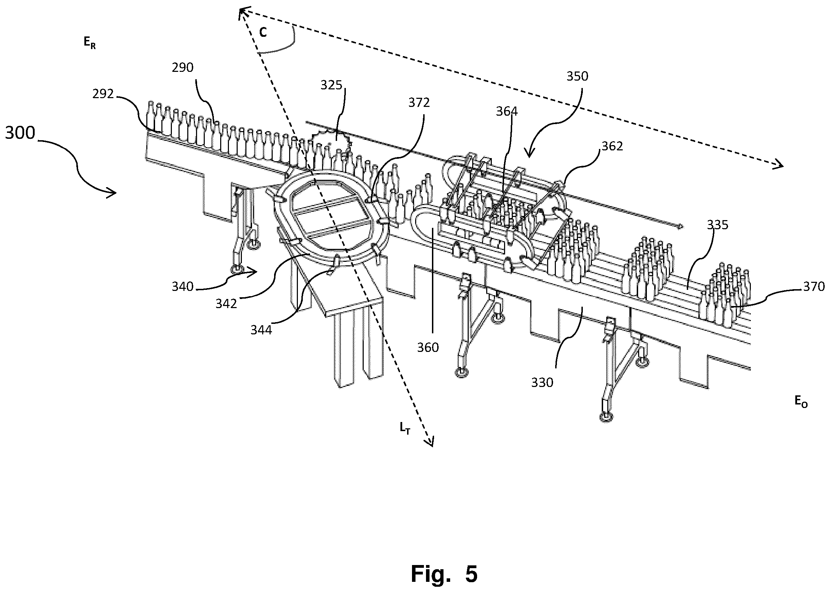

FIG. 5 illustrates a perspective view diagram representing an exemplary grouping unit, in accordance with the preferred embodiment of the present disclosure; grouping in columns, not in lanes

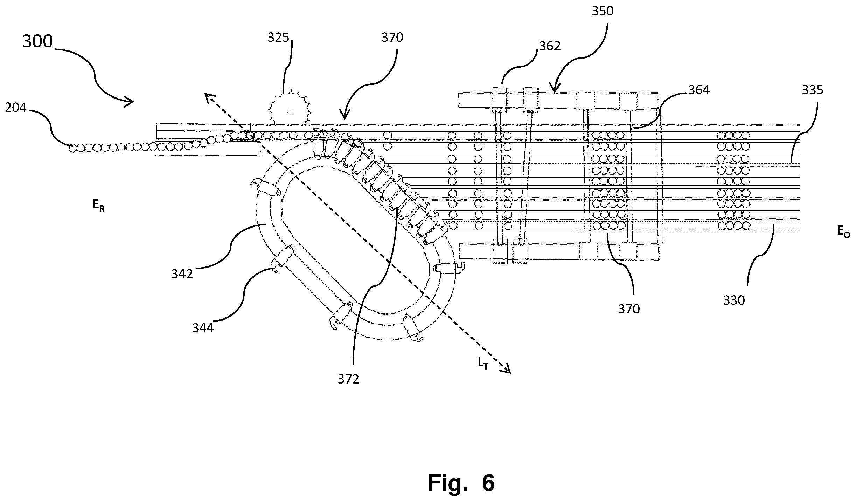

FIG. 6 illustrates a schematic diagram representing a grouping operation, in accordance with a preferred embodiment of the present disclosure;

### DETAILED DESCRIPTION

The present application discloses a conveying apparatus having a buffering unit, for transferring an infeed supply of articles such as beverage containers, adapted to hold a plurality of contents such as food item including liquid foods, home essentials, stationary items, and the like, from an infeed station towards an outfeed station. The conveying unit while being efficient, is able to buffer articles without requiring any changes in the functional elements thereof. Further, the articles may be delivered in any desired manner and in any desired arrangement. While the articles in the context of the present invention are often cylindrical shaped beverage containers, it should be understood that the embodiments of the present invention may be applied in combination with various type of design and utilities irrespective of size, shape and materials.

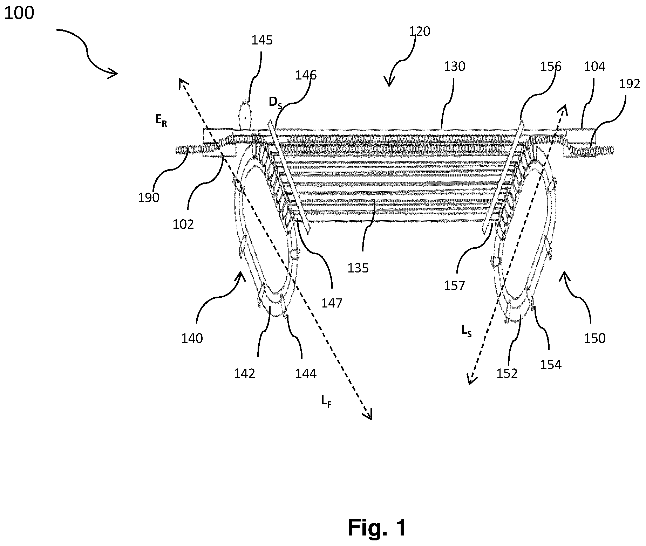

FIG. 1 illustrates a schematic diagram displaying a preferred embodiment of a conveying apparatus of the present disclosure. As illustrated in FIG. 1, the present disclosure provides a conveying apparatus **100** for conveying an infeed supply of articles **190** from an infeed station **105** at a receiving end **E_{R}** towards an outfeed station **1** at an output end **E_{O}**. The conveying apparatus **100** includes a buffering unit **120.** The buffering unit **120** includes a base conveyor **130** extending between the infeed station **105** and the outfeed station **110.** The buffering unit **120** further includes a distributing unit **140** at the receiving end **E_{R}** extended towards an accumulator unit **150** at the output end **E_{O}** through a plurality of buffer lanes **135** configured there between, onto the base conveyor **130.**

The distributing unit **140** includes a first eccentrically positioned closed loop track **142** comprising a plurality of supporting (or distributing) lugs **144** movingly configured thereon. The distributing unit **140** further includes a star-wheel **145** adapted to position each of the plurality of articles **190** received at the receiving end **E_{R}** towards one of the supporting lugs **144** such that the article **190** is supported by and moved along with the corresponding supporting lug **144** across the first closed loop track **142.** The distributing unit **140** further includes an alignment unit **146** configured onto a distal side **Dₛ** of the first closed loop track **142,** positioned generally eccentrically to the base conveyor **135** and generally parallel to a longitudinal direction **L_{F}** of the first closed loop track **142.** The alignment unit **146** includes a plurality of distributing gates **147** each aligned with one of the plurality of buffering lanes **135.**

The accumulator unit **150** includes a second eccentric closed loop track **152** oriented generally transversally to the first closed loop track **142.** The second closed loop track **152** includes a plurality of accumulating lugs **154** movingly configured thereon. The accumulator unit **150** further includes a guiding unit **156** positioned generally parallel to a longitudinal direction **L_{S}** of the second closed loop track **152.** The guiding unit **156** includes a plurality of accumulating gates **157** each aligned with one of the buffering lanes **135** and adapted to receive the articles **190** there through and deliver towards one of the accumulating lugs **154** such that article **190** is supported by and moved along with the corresponding accumulating lug **154** across the second closed loop track **152** towards a single output lane **192** at the outfeed end **110.**

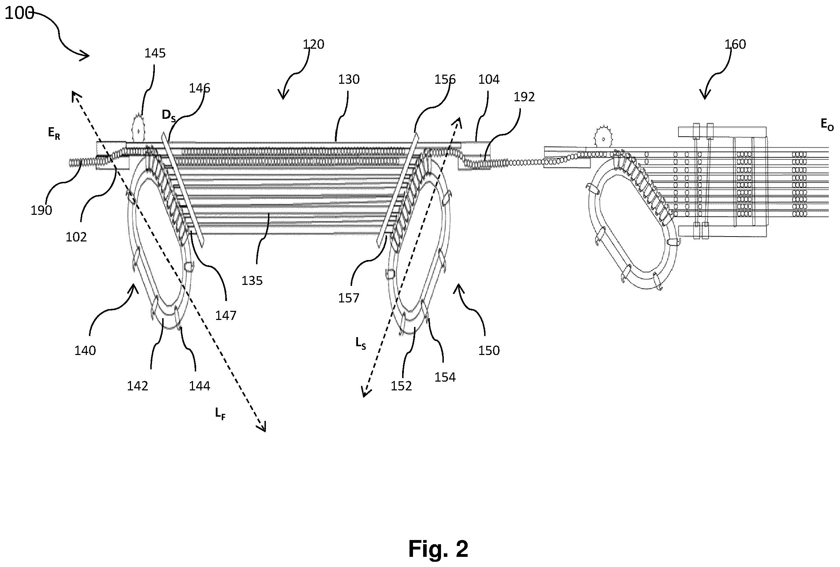

As illustrated in fig. 2, the conveying apparatus **100 may** further include a grouping unit **160** positioned at the output end adapted to receive output feed **192** of articles **190.**

In operation, the infeed article supply **190** is received at the buffering unit 120 where each of the articles **190** is selectively dropped within one of the buffering lanes **135** in such a way that the article supply **190** is progressively delivered into the plurality of buffer lanes **135** towards the accumulator unit **150.** Further, the accumulator unit **150** is adapted to receive and selectively guides the articles **190** towards the outfeed **110** such that a single output lane **192** of the articles **190** is received at the output end **E_{O}**.

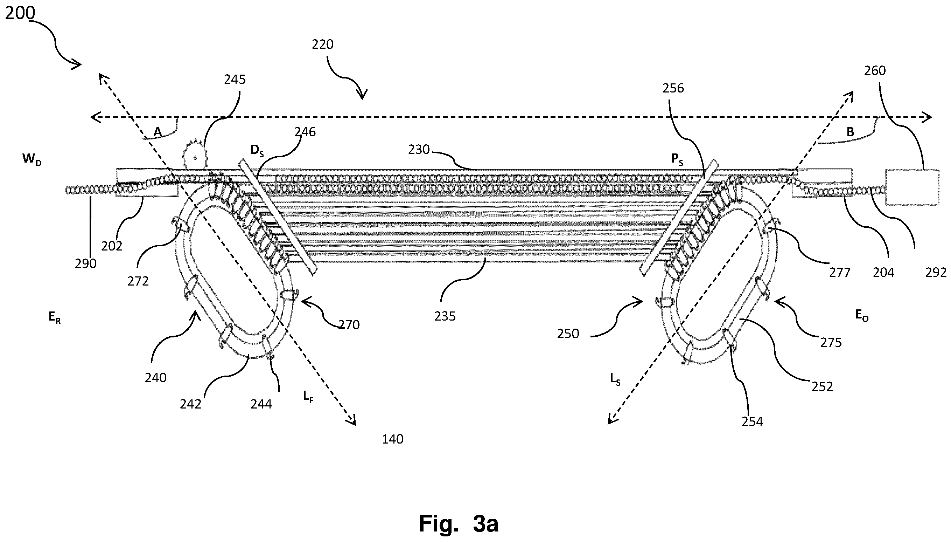

In description of the FIG. 3a - 2b that follow, elements common to the schematic system will have the same number designation unless otherwise noted. In a preferred embodiment, as illustrated in Fig. 3a and 2b, an exemplary conveying apparatus **200** having an incoming feed line **202** carrying a continuous supply of beverage containers **290** and employing a buffer unit **220** for selectively buffering the beverage containers **290** while conveying the same towards an outgoing feed line **204** is provided. The apparatus **200** further includes a grouping unit **260** for grouping the one or more beverage containers **290,** in a desired predetermined arrangement at an out-feed line **204.** The in-feed conveying line **202** is generally a conveying apparatus adapted to facilitate a movement of a supply of beverage containers **290** from a source such as infeed station [not shown] towards a destination such as an outfeed station [not shown] adapted to perform packaging of the beverage containers **290** of the current disclosure.

In a preferred embodiment, the beverage container **290** is a generally cup shaped container having a generally cylindrical shape. While the shape of the beverage container **290** is cup shaped for exemplary purpose only, it should be understood that the beverage container **290** may be any kind of suitable containers (e.g., cans, bottles, etc) of any shape and size, including the radius and height suitable for enclosing its contents.

As disclosed earlier, the buffering unit **220** includes a base conveyor **230** extending between a receiving end **E_{R}** towards an output end **E_{R},** and adapted to receive an infeed supply of the plurality of beverage containers **290** from the in-feed conveying line **202** at the receiving end **E_{R}.** Further, the buffering unit **220** a distributing unit **240** extended towards an accumulator unit **250** configured onto the base conveyor **230.**

The base conveyor **230** is generally a conveying apparatus having one or more means configured to suitably convey one or more lanes of the beverage containers **290** received thereon. In illustrated example, the conveyor **210** is a conveying belt conventionally known in the art. However, in other embodiments, any suitable conveyor such as for example, conveying tracks, rails, and the like may be used, without deviating from the scope of current disclosure. The base conveyor **230** at the is generally configured with a plurality of buffer lanes **235** adapted to enable the transfer of an individual lane there through. In some embodiments, the plurality of buffer lanes **235** is formed onto the base conveyor **230** by the dividing it using one or more guide rails, and the like. The advantage of such an embodiment is that multiple driving units are not required to drive the buffer lanes and therefore keeps the system inexpensive and simple to use. However, in other embodiments, the plurality of buffer lanes **235** may be in form of multiple parallel conveyors independently driven by their own powering mechanisms. While the exemplary embodiment includes eight buffer lanes **235,** it may be understood and contemplated by a person skilled in the art, that any desired number of buffer lanes **235,** may be utilized without deviating from the scope of the current disclosure.

The distributing unit **240** includes a first eccentrically positioned closed loop track **242** comprising a plurality of supporting (or distributing) lugs **244** movingly configured thereon. In a preferred embodiment, the first closed loop track is generally positioned such that a longitudinal axis **L_{F}** thereof is at an angle **A** to the base conveyor **230.** The angle **A** is generally an acute angle preferably ranging between 10 degrees and 90 degrees, or between 20 and 80, and preferably between 30 and 60.. So, customization to certain angle can be done depending an application and depending on expected conveying speed.

The distributing unit **240** further includes a first movement mechanism **270** for moving each of the plurality of supporting lugs **244** onto the first closed loop track **242.** In an embodiment, the first movement mechanism **270** includes a plurality of support movers **272** movingly configured onto the first closed loop track **242,** each of the support movers **272** adapted to movingly engage one of the plurality of supporting lugs **244.**

The distributing unit **240** further includes a star-wheel **245** adapted to position each of the plurality of articles **290** received at the receiving end **E_{R}** towards one of the supporting lugs **244** such that the article **290** is supported by and moved along with the corresponding supporting lug **244** across the first closed loop track **242.** The star-wheel **245** is generally adapted to avoid any possibility of falling down and / or get damaged at the receiving end **E_{R}** due to centrifugal impact of these containers **290,** since this apparatus generally receives infeed supply **290** at particularly higher speed. In some embodiments, the start wheel **245** may be replaced with any suitable mechanism conventionally known in the art without deviating from the scope of current disclosure.

The distributing unit **240** further includes an alignment unit **246** configured onto a distal side **Dₛ** of the first closed loop track **242,** positioned generally eccentrically to the base conveyor **235** and generally parallel to the longitudinal axis **L_{F}** of the first alignment unit **246** is generally positioned is at the angle substantially same as that of angle A**,** to the base conveyor **230.** The alignment unit **246** is generally a diverting structure adapted to selectively align a flow of the already distributed beverage containers **290** within one of the buffer lanes **235.** In a preferred embodiment, as illustrated in Fig , the alignment unit 246 includes a generally bar based structure extending generally over an entire eccentric width **W,** parallel to the longitudinal axis **L_{F}** of the base conveyor **230.** The alignment unit **246** further includes a plurality of horizontally configured alignment gates, each aligned with one of the buffering lanes **235** In a preferred embodiment number of alignment gate is same as the number of buffer lanes **235.** The alignment gates **247** may be formed of a plurality of vertical branching rails **249** such that each combination of two consecutive rails **249** acts as one of the alignment gates **247.** Further, each of the branching rails has a proximal portion **249a** and a distal portion **249b.** The proximal portion **249a** of each of the branching rails **249** is at a predetermined distance **D** away from the eccentric positioned first closed loop track. Such a configuration allows the possibility of progressively delivery of the articles **290** within any buffer lane **235** after previous lanes besides it is filled completely. However, in other embodiments, the delivery of the articles **290** within the buffer lane is selected dynamically on the basis of one or more predetermined logics and dynamic selection by lugs such that can be chosen between FIFO and non FIFO mode, or even grouping at delivery in the lanes and buffering grouped articles.

The accumulator unit **250** includes a second eccentrically positioned closed loop track **252** oriented generally transversally to the first closed loop track **242** such that a longitudinal axis **L_{S}** of the second closed loop track **252** is at an angle **B** to the base conveyor **230,** and generally intersects with the longitudinal axis **L_{F}** of the first closed loop track **242,**

In a preferred embodiment, where the **angle A** is generally an acute angle preferably ranging between 40 degree and 70 degree, the angle B is an obtuse angle ranging between 100 degree and 130 degree. However, in other embodiments, where the angle A is an obtuse angle preferably ranging between 100 degree and 130 degree, the angle B is an obtuse angle ranging between 100 degree and 130 degree.

The accumulator unit **250** includes a plurality of accumulating lugs **254** movingly configured onto the second closed loop track **252.** The accumulator unit **250** further includes a second movement mechanism **275** for moving each of the plurality of accumulating lugs **254** onto the second closed loop track **252.** In an embodiment, the second movement mechanism **275** includes a plurality of accumulating movers **277** movingly configured onto the second closed loop track **252,** each of the accumulating movers **277** adapted to movingly engage one of the plurality of accumulating lugs **254.**

The accumulator unit **250** further includes a guiding unit **256** configured onto a proximal side **Pₛ** of the second closed loop track **252,** positioned generally eccentrically to the base conveyor **235** and generally parallel to the longitudinal axis **L_{S}** of the second closed loop track **252.** The guiding unit **256** is generally a diverting structure adapted to selectively receive and / or accumulate a flow of the already distributed beverage containers **290** from one of the buffer lanes **235.** In a preferred embodiment, as illustrated in Fig , the guiding unit **256** includes a generally bar based structure extending generally over an entire eccentric width **W,** parallel to the longitudinal axis **L_{S}** of the second closed loop track **252.** The guiding unit **256** further includes a plurality of horizontally configured accumulating gates **257,** each aligned with one of the buffering lanes **235.** In a preferred embodiment number of accumulating gate **257** is same as the number of buffer lanes **235.** The accumulating gates **247** may be formed of a plurality of vertical accumulating rails **249** such that each combination of two consecutive accumulating rails **259** acts as one of the accumulating gates **247** to receive one or more containers **290** from the associated buffer lane **235.** Further, each of the branching rails has a proximal portion **259a** and a distal portion **259b.** The proximal portion **259a** of each of the branching rails **259** is at a predetermined distance **X** away from the eccentric positioned second closed loop track **252.** Such a configuration allows the possibility of progressively evacuation of the articles **290** from any buffer lane **235** only after a previous lanes besides has been evacuated completely. However, in other embodiments, the evacuation of the articles **290** from the buffer lanes **235** is selected dynamically on the basis of one or more predetermined logics, to be discussed later.

In some preferred embodiments, each of the supporting lugs **244** and the accumulating lugs **254** is formed into a predetermined shape in accordance to a shape of the one or more contact portions of the beverage container **290.** Accordingly, the predetermined shape of each of the supporting lugs **244,** and the accumulating lugs **254** is same and is of a shape complementary to the shape at the contact portion of the beverage container **290.** For example, in a preferred embodiment, the beverage container is a generally cup shaped container with generally rounded corners. In such an embodiment, each of the supporting lugs **242,** is of shape same as that of the accumulating lugs **254** and is a generally arc shaped structure adapted to movingly support the generally rounded corners of the beverage container **290.** However, the supporting lugs, as well as the accumulating lugs may have any form adapted to support any article shape.

In use, as disclosed earlier, the conveying apparatus **200** is adapted to be positioned onto an output line of a manufacturing unit carrying a supply of beverage containers **290** to be conveyed towards a packaging station. The conveying apparatus **200** receives a continuous supply of the beverage containers **290** through the infeed line **202** which are first received at buffering unit **220** where the supply of article is individually distributed into one or more of plurality of buffer lanes **235** by action of the distributing unit **230.** The plurality of article supply is then received at the accumulation unit **250** which accumulates the beverage containers from the multiple buffer lanes **235** and sends towards the single outfeed lane **292** at the outfeed line **204.**

In some embodiments of the current disclosure, the conveying apparatus **200** further includes a grouping unit **300** adapted to group a single lane supply **292** of the beverage containers **290** received through the outfeed line **202,** them into a group of a desired predetermined arrangement.

The grouping unit **300** includes a second distributing unit **340** adapted to receive a single lane supply **292** of the beverage containers **290** from the outfeed line **202** through a second start wheel **325.** The grouping unit **300** further includes an outfeed conveyor **330** extending away from the second distributing unit **320** towards a grouping station **350** configured thereon at the output end **E_{O,}.**

The outfeed conveyor **330** is generally a conveying apparatus having one or more means configured to suitably convey one or more lanes of the beverage containers **290** received thereon. In illustrated example, the conveyor **330** is a conveying belt conventionally known in the art. However, in other embodiments, any suitable conveyor such as for example, conveying tracks, rails, and the like may be used, without deviating from the scope of current disclosure. The outfeed conveyor **330** at the is generally configured with a plurality of grouping lanes **335,** each adapted to enable the transfer of an individual lane there through. In some embodiments, the plurality of grouping lanes **335** is formed onto the outfeed conveyor **330** by the dividing it using one or more guide rails, and the like. The advantage of such an embodiment is that multiple driving units are not required to drive the buffer lanes and therefore keeps the system inexpensive and simple to use. However, in other embodiments, the plurality of grouping lanes **335** may be in form of multiple parallel conveyors independently driven by their own powering mechanisms. While the exemplary embodiment includes six grouping lanes **335,** it may be understood and contemplated by a person skilled in the art, that any desired number of grouping lanes **335,** may be utilized without deviating from the scope of the current disclosure.

The second distributing unit **340** is generally adapted to receive the beverage containers **290** and selectively distribute towards one or more of plurality of grouping lanes **335.** includes a third eccentrically positioned closed loop track **342** comprising a plurality of grouping lugs **344** movingly configured thereon. In a preferred embodiment, the third closed loop track is generally positioned such that a longitudinal axis **L_{T}** thereof is at an angle **C** to the outfeed conveyor **330.** The angle **C** is generally an acute angle preferably ranging between 30 degree and 60 degree. However, in other embodiments, the angle **C** may be an obtuse angle preferably ranging between 100 degree and 140 degree. In yet other embodiments, the angle **C** may be any suitable angle without deviating from the scope of current disclosure.

The second distributing unit **340** further includes a third movement mechanism **370** for moving each of the plurality of grouping lugs **244** onto the third closed loop track **342.** In an embodiment, the third movement mechanism **370** includes a plurality of second movers **372** movingly configured onto the third closed loop track **342,** each of the second movers **372** adapted to movingly engage one of the plurality of grouping lugs **344.**

The grouping station **350** is adapted to group the beverage containers received onto the one or more plurality of beverage containers **290** received onto the different grouping lanes **335.** The grouping station **350** further includes a pair of parallel tracks **360,** each positioned on a different side generally parallel to the outfeed conveyor **330** and extending away from third closed loop track **340** towards the output end **E_{O}**. The grouping station **350** further includes a plurality of pair of independently movable grouping movers **362** movingly configured onto the pair of tracks **360,** and connected to each other through a longitudinal grouping bar **364.** Each of the longitudinal grouping bar **364** is adapted to optionally and selectively push one or more rows of beverage containers **290** received onto the outfeed conveyor **330** so as to optionally accelerate and / or decelerate the rows to arrange them in form of groups **370** of the beverage containers **290,** such that a first longitudinal bar **364a** of the plurality of longitudinal bars **364** acts as a front bar and a second longitudinal bar **364b** of the plurality of longitudinal bars **364** acts as a back bar so as to form a group **370** of beverage containers **290** in the desired predetermined arrangement.

The conveying apparatus **200** further includes a first powering means [not shown] for enabling a movement of the one or more incoming conveying line **202,** the outfeed conveying line **204,** the base conveyor **230,** the outfeed conveyor **330,** and various sub-components thereof.

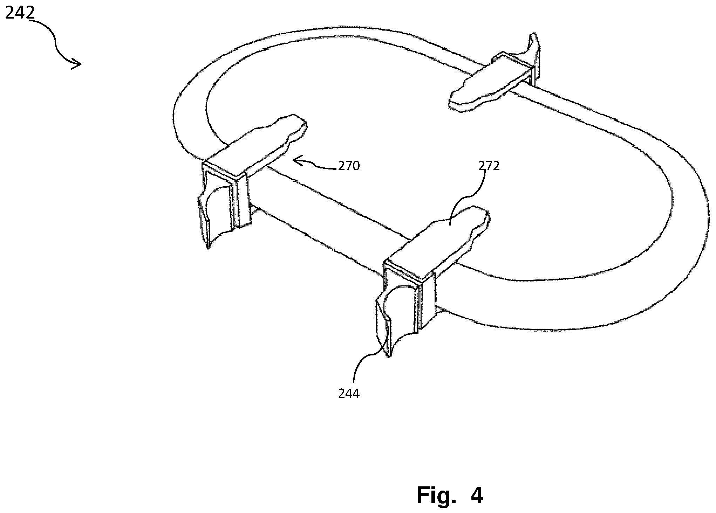

The conveying apparatus **200** further includes a second powering means [not shown] for enabling a movement of each of the movers including, the supporting movers **272,** the accumulating movers **277,** the second movers **372,** and the grouping movers **362,** independently along the corresponding closed loop tracks. In a preferred embodiment, the second powering means comprise linear motors. In such an embodiment, the linear motor is a generally moving magnet type of motor conventionally known in the art. Further in such embodiments, the linear motor utilizes the corresponding closed loop tracks as a stator and each of the movers **272, 277, 372, 362,** as a rotor thereof. In such an embodiment, each of pair of closed loop tracks include an interior portion (not shown) accessible through an open end. The closed loop tracks in such embodiments further includes a plurality of coils fixedly arranged in a longitudinal direction within the interior portion thereof. Further in such embodiments, as illustrated in Fig. 4, each of the movers **272, 277, 372, 362,,** is similar in configuration and is generally in the form of a U shaped magnetic yoke having a permanent magnet positioned therewithin on mutually facing inner sides thereof such that when positioned onto the corresponding tracks, each of the of the yoke forms a magnetic circuit and said stator being positioned between the permanent magnets. Further, each of the movers **272, 277, 372, 362,** include a sliding mechanism such as a roller, or the like, supported by one or more roller-supporting portions formed at lower ends of the corresponding closed loop tracks. In operation when current is passed through the stator, a uniform magnetic field is generated and on the basis of polarity of permanent magnets, a movement of each of the movers **272, 277, 372, 362,** is achieved. Further, the speed, direction and other parameters may be controlled in accordance with the direction, intensity, etc of the flow of the current applied thereupon.

In other embodiments, each of the movers **272, 277, 372, 362,** are utilized as stator whereas the corresponding closed loop tracks are utilized as the rotors. In such an embodiment, each of the movers **272, 277, 372, 362,** includes built in coils and each of the corresponding tracks include a plurality of magnets configured thereon in a longitudinal direction such that the movers are able to come into an electromagnetic interaction thereby enabling a movement thereof.

The conveying apparatus **200** may include one or more control unit [not shown] for managing the operations thereof, and particularly for managing the working of the first powering means and / or the second powering means and more particularly the movement of the each of the movers **272, 277, 372, 362,** so as to optimize the movement of the corresponding lugs **242, 272, 372, 362** such that a desired distribution and / or grouping of the beverage containers **290** is achieved.

In some embodiments, the control unit may include an input unit for receiving the predetermined desired arrangement of the beverage containers **290** to be formed at the grouping unit 300. Further, the control unit may include a plurality of sensors [not shown] for tracking the parameters such as for example, position of the containers and / or rows of containers to be buffered and / or grouped, number of containers within each row, speed of movement, and the like. The control unit may further include a processor unit for processing the data captured by the input unit on the basis of predetermined logics / rules for facilitating the movement of the plurality of movers **272, 277, 372, 362.** The control unit may further include an instruction unit that delivers the instructions to various components such as various powering means, linear motors, motors, driving units, or the like, to facilitate a desired and smooth operation.

In some embodiments, the control unit may be provided as a computer program product, such as may include a computer-readable storage medium or a non-transitory machine-readable medium maintaining instructions interpretable by a computer or other electronic device, such as to perform one or more processes. A non-transitory machine-readable medium includes any mechanism for storing information in a form (including a processing application or software) readable or interpretable by a machine (such as a computer). The non-transitory machine-readable medium may take the form of, but is not limited to, any known storage technique, including magnetic storage media, optical storage media, magneto-optical storage media; read only memory (ROM); random access memory (RAM); erasable programmable memory (including EPROM and EEPROM); flash memory; and otherwise.

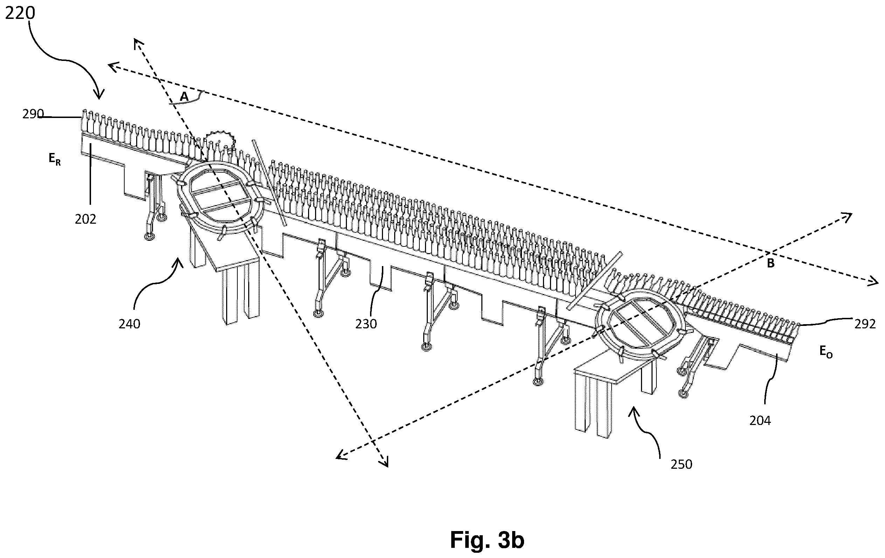

FIG. 3 and 3 schematically show the arrangement of the basic components of the conveying apparatus **200** of the present disclosure. However, in the construction of commercial functional units, secondary components such as couplers, connectors, support structure and other functional components known to one of skill in the field of conveying apparatus and more particularly the buffering units for use with conveyor systems, may be incorporated within the conveying apparatus **200.** Such commercial arrangements are included in the present invention as long as the structural components and arrangements disclosed herein are present. Accordingly, it is to be contemplated that the conveying apparatus **200** may be configured to be used for any kind of articles of any possible shape, size and dimensions, as deems possible without deviating from the scope of the current invention.

### INDUSTRIAL APPLICABILITY

The present disclosure relates to a conveying apparatus **200** having a buffering unit **220** adapted to temporarily accumulate any type the articles **290,** i.e. cylindrical and non-cylindrical, and made of any type of material including glass, metal, paper, foils, thin plastic, and any combination.

The buffering unit of the current disclosure may be easily integrated into an existing conveyor line without any axial offset. Further, since there is a plurality of parallel buffer lanes, the buffering unit may be accommodated within a small base area and at a height which is mostly suitable to be handled by the users. Particularly advantageously, the utilization of such a buffering unit avoids the need of backing up the products at the infeed and / or at the outfeed.

Further, since the current buffering unit consists of plurality of buffer lanes configured onto a same conveyor means, the apparatus is simple to use and avoids adding to the complexity and costs for managing a plurality of individual buffer conveyors. Accordingly, the current conveying apparatus having buffering unit provide an improved system so to achieve lower cost per article and higher space efficiency, and therefore enabling a cost-effective inclusion of even slower moving articles.

Particularly advantageously, the buffering means of the current disclosure is configured to progressively and uniformly distribute articles into the individual tracks or lanes. Further, the dropping of the articles within the respective buffer lane may be controlled individually, and possibly, for example, as a function of sensor signals which are supplied by one or more sensors that monitor the distribution of the articles over the individual tracks buffer lanes of the base conveyor. Therefore, the current apparatus is well suited to fully automate the conveying process.

Further, the conveying apparatus is adaptable to different shapes and sizes of articles, and is therefore well suitable to process the conveying of different sizes with ease and efficiently. Moreover, the predetermined shape may be changed by simply changing the lugs **244, 274** and therefore not requiring to change the entire apparatus for different predetermined shapes.

The present buffering conveying apparatus provides the possibility of grouping articles immediately after buffering by providing outfeed via different lanes enabling formation of groups over the lanes. It is obvious that accordingly buffering and grouping can be achieved with limited machine footprint compared to conventional apparatuses.

Alternatively, the present disclosure provides the possibility of manufacturing the conveyor system with integrally formed grouping unit. Such a conveyor system for conveying and packaging articles into predetermined arrangement, while being cost-efficient, is very quick and easy to use and offers comfortable handling of articles of any shape, size or any variety of configurations.

Further, since the articles are released in the buffering lanes by the distributing lugs, and picked again by accumulating lugs for outfeed, they are conveyed contactless. This also enables conveying articles that do not resist the pushing pressure in conventional buffering conveyors, or that do not have the conventional cylindrical shape of round cans, round bottles, etc..

As the distributing and accumulating lugs are moved by movers on the closed loop tracks, they enable respectively releasing or picking an article at any lane. Therefore, the buffering conveying apparatus of the present invention offers much more flexibility while buffering than conventional buffering apparatuses. Firstly, the apparatus enables buffering in FIFO (first-in-first-out) mode as well as non-FIFO mode. Additionally, the apparatus enables separating articles, then buffering followed by grouping, as well as separating articles, then grouping and buffering grouped articles.

Additionally, since the buffering unit **220** of the current disclosure while being applicable onto the conveyor apparatus **200,** does not impact the rest of the conveying process. A single conveyor apparatus 200 may utilize as many as buffering units **220** within the same arrangement.

While the conveying apparatus **200** is described primarily for conveying, buffering and grouping beverage containers, it is also contemplated for a person skilled in the art that the buffering means **220** of the current disclosure may be implemented in various industries such as food industry, transport industry, house hold appliance industry in transportation of any kind of product or group of products, of any shape, size or any variety of configurations, without limiting it to the beverage industry.

## Claims

1. A conveying apparatus (100) comprising a buffering unit (120, 220) extending between a receiving end (**E_{R}**) towards an output end (**E_{O}**), the buffering unit comprising:
a base conveyor (130, 230):
a distributing unit (140, 240) adapted to distribute a at least one incoming line of articles (190, 290) received at the receiving end into a plurality of buffering lanes (135, 235) configured onto the base conveyor, said distributing unit comprising a first closed loop track (142, 242) positioned at the receiving end of the base conveyor, the first closed loop track comprising a plurality of distributing lugs (144, 244) movingly configured thereon;
an accumulator unit (150, 250) extending away from the distributing unit through the plurality of buffering lanes, the accumulator unit adapted to accumulate the articles received through the plurality of buffering lanes into a at least one output lane (192), said accumulator unit comprising a second closed loop track (152, 252) positioned on the base conveyor and oriented generally transversally to the first closed loop track, the second closed loop track comprising a plurality of accumulating lugs (154, 254) movingly configured thereon;
wherein the closed loop tracks are powered by a linear motor and wherein articles received at the buffering unit are each supported and moved along with one of the distributing lugs and dropped within one of the buffering lanes such that said articles are progressively distributed into a the plurality of buffer lanes towards the accumulator unit wherein the corresponding articles are picked by one of the accumulating lugs such that the one or more output lanes (192) of articles are received at the output end.

2. **The** conveying apparatus of claim 1 wherein the distributing unit (140, 240) comprises a separating means (145, 245), e.g. a star wheel, configured onto a proximal side of the first closed loop track (142, 242), and adapted to position at least one of the articles along one of the distributing lugs (144, 244) such that the article is supported by and moved along with the corresponding distributing lug across the first closed loop track.

3. The conveying apparatus of claim 1 wherein the distributing unit (140, 240) comprises an alignment unit (146, 246) configured onto a distal side of the first closed loop track (142, 242), positioned along longitudinal direction of the first closed loop track, the alignment unit comprising one or a plurality of distributing gates (147, 247) each aligned with one of the buffering lanes (135, 235).

4. The conveying apparatus of claim 1 wherein the accumulator unit (150, 250) comprises a guiding unit (156, 256) positioned generally parallel to a longitudinal direction of the base conveyor (130, 230), the guiding unit comprising a plurality of accumulating gates (157, 257) each aligned with one of the buffering lanes (135, 235) and adapted to receive the articles there through.

5. The conveying apparatus of claim 1, further comprising a grouping unit (160, 260, 300) extending away from the accumulator unit, the grouping unit comprising:
a second distributing unit (340) adapted to distribute a single incoming lane of articles received from the buffering unit (120, 220), the second distributing unit comprising:
a third closed loop track (342) comprising a plurality of second distributing lugs (344) movingly configured thereon;
the second distributing unit (340) configured onto a distal side of the third closed loop track,
positioned generally eccentrically to the base conveyor (130, 230) and generally parallel to a longitudinal direction of the third closed loop track (342), the second distributing unit comprising a plurality of second distributing gates (147) each providing an output towards one of a plurality of distributing lanes onto the base conveyor;
a pair of parallel grouping tracks (360) extending away from the third closed loop track, each positioned on one side of the base conveyor, the pair of parallel grouping tracks comprising a plurality of pairs of grouping movers (362), each pair of grouping movers connected through a longitudinal bar (364);
wherein when the single lane of the articles is received at the grouping unit (160, 260, 300), the articles are first distributed into multiple lanes onto the distributing lanes of the base conveyor between the pair of parallel tracks wherein further the plurality of grouping movers are moved in such a way that at least one of the longitudinal bar (360) acts as a front bar and at least one of the other longitudinal bar (364) acts as a back bar so as to form a group of articles of predetermined arrangement there between.

6. The conveying apparatus of claim 1, wherein the first distributing unit comprising a plurality of distributing movers (272), each engaging one of the distributing lugs (144, 244) for enabling a longitudinal movement thereof onto the corresponding first closed loop track (142, 242).

7. The conveying apparatus of claim 1, wherein the accumulator unit (150, 250) comprising a plurality of accumulating movers (277), each engaging one of the accumulating lugs (154, 254) for enabling a longitudinal movement thereof onto the corresponding second closed loop track (152, 252).

8. The conveying apparatus of claim 1, wherein each of the lugs including the distributing lugs (144, 244) and / or the accumulating lugs (154, 254) is of a shape and / or size suitable to movingly support the moving article in a direction of its movement, at least partially at a contact surface thereof.

9. The conveying apparatus of claim 1, wherein the alignment unit (146, 246) is a diverting structure having a plurality of horizontally configured alignment gates (147, 247), each aligned with one of the buffering lanes (135, 235) and configured in such a way that the article moves to a next gate only when a buffer lane to a previous gate is filled completely due to eccentric position of the first closed loop track (142, 242) and the alignment unit.

10. The conveying apparatus of claim 1, wherein the accumulator unit (150, 250) is a diverting structure having a plurality of horizontally configured accumulating gates (247, 257), each aligned with one of the buffering lanes (135, 235) and configured in such a way that the article is received from each of the buffer lanes so as to be accumulated into at least one lane wherein further the buffer lanes are emptied progressively starting from the last lanes towards the first lane due to eccentric position of the second closed loop track (152, 252) and the accumulator unit.

11. The conveying apparatus of claim 9 or 10, wherein the diverting structure is made in the form of longitudinal bar (364a, 364b) having a plurality of spaced apart branches forming the respective alignment (147, 247) / accumulating gates (247, 257), each branch aligned with one of the plurality of buffer lanes (135, 235).

12. The conveying apparatus of claim 1 further comprising a control unit for optimizing a movement of each of the parallel grouping tracks, the base conveyor (130, 230), the plurality of movers (272, 277, 372, 362) and therefore the moving articles.

## Patentansprüche

1. Fördereinrichtung (100), die eine Puffereinheit (120, 220) umfasst, die sich zwischen einem Aufnahmeende (E_{R}) und einem Ausgabeende (Eₒ) erstreckt, wobei die Puffereinheit Folgendes umfasst: ein Basisförderband (130, 230):
eine Verteileinheit (140, 240), die dazu angepasst ist, mindestens eine eingehende Reihe von Artikeln (190, 290), die an dem Empfangsende empfangen werden, auf eine Vielzahl von Pufferbahnen (135, 235) zu verteilen, die auf dem Basisförderer konfiguriert ist, wobei die Verteileinheit eine erste geschlossene Schleifenspur (142, 242) umfasst, die an dem Empfangsende des Basisförderers positioniert ist, wobei die erste geschlossene Schleifenspur eine Vielzahl von Verteilmitnehmern (144, 244) darauf beweglich konfiguriert umfasst;
eine Sammlereinheit (150, 250), die sich von der Verteileinheit durch die Vielzahl von Pufferbahnen weg erstreckt, wobei die Sammlereinheit dazu angepasst ist, die durch die Vielzahl von Pufferbahnen aufgenommenen Artikel in mindestens einer Ausgabebahn (192) zu sammeln, wobei die Sammlereinheit eine zweite geschlossene Schleifenspur (152, 252) umfasst, die auf dem Basisförderer positioniert und im Allgemeinen quer zu der ersten geschlossenen Schleifenspur ausgerichtet ist, wobei die zweite geschlossene Schleifenspur eine Vielzahl von darauf beweglich konfigurierten Sammelmitnehmern (154, 254) umfasst;
wobei die geschlossenen Schleifenspuren von einem Linearmotor angetrieben werden und wobei die an der Puffereinheit aufgenommenen Artikel jeweils mit einem der Verteilmitnehmer getragen und zusammen mit diesem bewegt und in eine der Pufferbahnen derart fallen gelassen werden, dass die Artikel allmählich in die Vielzahl von Pufferbahnen in Richtung der Sammlereinheit verteilt werden, und wobei die entsprechenden Artikel von einem der Sammelmitnehmer derart aufgenommen werden, dass die eine oder die mehreren Ausgabebahnen (192) mit Artikeln an dem Ausgabeende aufgenommen werden.

2. Fördereinrichtung nach Anspruch 1, wobei die Verteileinheit (140, 240) ein Trennmittel (145, 245), z. B. ein Sternrad, umfasst, das auf einer proximalen Seite der ersten geschlossenen Schleifenspur (142, 242) konfiguriert und dazu angepasst ist, mindestens einen der Artikel entlang der Verteilmitnehmer (144, 244) derart zu positionieren, dass der Artikel von dem entsprechenden Verteilmitnehmer getragen und zusammen mit dem entsprechenden Verteilmitnehmer über die erste geschlossene Schleifenspur bewegt wird.

3. Fördereinrichtung nach Anspruch 1, wobei die Verteileinheit (140, 240) eine Ausrichtungseinheit (146, 246) umfasst, die auf einer distalen Seite der ersten geschlossenen Schleifenspur (142, 242) konfiguriert ist, die in Längsrichtung der ersten geschlossenen Schleifenspur positioniert ist, wobei die Ausrichtungseinheit eine oder mehrere Verteilweichen (147, 247) umfasst, die jeweils mit einer der Pufferbahnen (135, 235) ausgerichtet sind.

4. Fördereinrichtung nach Anspruch 1, wobei die Sammlereinheit (150, 250) eine Führungseinheit (156, 256) umfasst, die im Allgemeinen parallel zu einer Längsrichtung des Basisförderers (130, 230) positioniert ist, wobei die Führungseinheit eine Vielzahl von Sammelweichen (157, 257) umfasst, die jeweils mit einer der Pufferbahnen (135, 235) ausgerichtet und dazu angepasst sind, die Gegenstände durch diese hindurch aufzunehmen.

5. Fördereinrichtung nach Anspruch 1, die weiter eine Gruppiereinheit (160, 260, 300) umfasst, die sich von der Sammlereinheit weg erstreckt, wobei die Gruppiereinheit Folgendes umfasst:
eine zweite Verteileinheit (340), die zum Verteilen einer einzigen eingehenden Bahn von Artikeln aus der Puffereinheit (120, 220) angepasst ist, wobei die zweite Verteileinheit Folgendes umfasst:
eine dritte geschlossene Spur (342), die eine Vielzahl zweiter Verteilmitnehmer (344) umfasst, die beweglich darauf konfiguriert sind;
wobei die zweite Verteileinheit (340), die auf einer distalen Seite der dritten geschlossenen Schleifenspur konfiguriert ist, im Allgemeinen exzentrisch zu dem Basisförderer (130, 230) positioniert und im Allgemeinen parallel zu einer Längsrichtung der dritten geschlossenen Schleifenspur (342) positioniert ist, wobei die zweite Verteileinheit eine Vielzahl zweiter Verteilweichen (147) umfasst, die jeweils einen Ausgang in Richtung einer einer Vielzahl von Verteilbahnen auf dem Basisförderer bereitstellen;
ein Paar paralleler Gruppierspuren (360), die sich von der dritten geschlossenen Schleifenspur weg erstrecken und jeweils auf einer Seite des Basisförderers positioniert sind, wobei das Paar paralleler Gruppierspuren eine Vielzahl von Paaren von Gruppierbewegungselementen (362) umfasst, wobei jedes Paar von Gruppierbewegungselementen durch eine Längsstange (364) verbunden ist;
wobei, wenn die einzige Bahn von Artikeln an der Gruppiereinheit (160, 260, 300) aufgenommen wird, die Artikel zunächst auf mehrere Bahnen auf den Verteilbahnen des Basisförderers zwischen dem Paar paralleler Spuren verteilt werden, wobei die Vielzahl von Gruppierbewegungselementen weiter derart bewegt wird, dass mindestens eine der Längsstangen (360) als eine vordere Stange und mindestens eine der anderen Längsstangen (364) als eine hintere Stange fungiert, um zwischen diesen eine Gruppe von Artikeln mit vorbestimmter Anordnung zu bilden.

6. Fördereinrichtung nach Anspruch 1, wobei die erste Verteileinheit eine Vielzahl von Verteilbewegungselementarmen (272) umfasst, die jeweils mit einem der Verteilmitnehmer (144, 244) in Eingriff stehen, um eine Längsbewegung derselben auf die entsprechende erste geschlossene Schleifenspur (142, 242) zu ermöglichen.

7. Fördereinrichtung nach Anspruch 1, wobei die Sammlereinheit (150, 250) eine Vielzahl von Sammlerbewegungselementen (277) umfasst, von denen jedes mit einem der Verteilmitnehmer (154, 254) in Eingriff steht, um eine Längsbewegung derselben auf die entsprechende zweite geschlossene Schleifenspur (152, 252) zu ermöglichen.

8. Fördereinrichtung nach Anspruch1, wobei jeder der Mitnehmer einschließlich der Verteilmitnehmer (144, 244) und / oder der Sammelmitnehmer (154, 254) eine bestimmte Gestalt und / oder eine Größe aufweisen, die dazu geeignet ist, den sich bewegenden Artikel in einer Richtung seiner Bewegung mindestens teilweise an einer Kontaktfläche derselben bewegend zu tragen.

9. Fördereinrichtung nach Anspruch 1, wobei die Ausrichteinheit (146, 246) eine Umleitstruktur ist, die eine Vielzahl horizontal konfigurierter Ausrichtungsweichen (147, 247) aufweist, die jeweils mit einer der Pufferbahnen (135, 235) ausgerichtet und derart konfiguriert sind, dass sich der Artikel nur dann zu einer nächsten Weiche bewegt, wenn eine Pufferbahn zu einer vorherigen Weiche aufgrund einer exzentrischen Position der ersten geschlossenen Schleifenspur (142, 242) und der Ausrichteinheit vollständig gefüllt ist.

10. Fördereinrichtung nach Anspruch 1, wobei die Sammlereinheit (150, 250) eine Umleitstruktur ist, die eine Vielzahl horizontal angeordneter Sammelweichen (247, 257) aufweist, die jeweils mit einer der Pufferbahnen (135, 235) ausgerichtet und derart konfiguriert sind, dass der Artikel von jeder der Pufferbahnen aufgenommen wird, um in mindestens einer Bahn gesammelt zu werden, wobei die Pufferbahnen aufgrund exzentrischer Position der zweiten geschlossenen Schleifenspur (152, 252) und der Sammlereinheit allmählich ausgehend von den letzten Bahnen zu der ersten Bahn hin entleert werden.

11. Fördereinrichtung nach Anspruch 9 oder 10, wobei die Umleitstruktur in der Form einer Lenkstange (364a, 364b) hergestellt ist, die eine Vielzahl beabstandeter Zweige aufweist, die die jeweiligen Ausrichtungs- (147, 247) / Sammelweichen (247, 257) bilden, wobei jeder Zweig mit einer der Vielzahl von Pufferbahnen (135, 235) ausgerichtet ist.

12. Fördereinrichtung nach Anspruch 1, die weiter eine Steuereinheit zum Optimieren einer Bewegung jeder der parallelen Gruppierspuren des Basisförderers (130, 230), der Vielzahl von Bewegungselementen (272, 277, 372, 362) und daher der zu bewegenden Artikel umfasst.

## Revendications

1. Appareil de transport (100) comprenant une unité de stockage tampon (120, 220) s'étendant entre une extrémité de réception (E_{R}) vers une extrémité de sortie (Eₒ), l'unité de stockage tampon comprenant : un convoyeur de base (130, 230) :
une unité de distribution (140, 240) adaptée pour distribuer au moins une ligne entrante d'articles (190, 290) reçue à l'extrémité de réception dans une pluralité de voies de stockage tampon (135, 235) configurées sur le convoyeur de base, ladite unité de distribution comprenant une première piste en boucle fermée (142, 242) positionnée à l'extrémité de réception du convoyeur de base, la première piste en boucle fermée comprenant une pluralité de pattes de distribution (144, 244) configurées de manière à pouvoir se déplacer sur celle-ci ;
une unité d'accumulateur (150, 250) s'étendant à partir de l'unité de distribution via la pluralité de voies de stockage tampon, l'unité d'accumulateur étant adaptée pour accumuler les articles reçus via la pluralité de voies de stockage tampon dans au moins une voie de sortie (192), ladite unité d'accumulateur comprenant une deuxième piste en boucle fermée (152, 252) positionnée sur le convoyeur de base et orientée généralement transversalement à la première piste en boucle fermée, la deuxième piste en boucle fermée comprenant une pluralité de pattes d'accumulation (154, 254) configurées de manière à pouvoir se déplacer sur celle-ci ;
dans lequel les pistes en boucle fermée sont alimentées par un moteur linéaire et dans lequel les articles reçus à l'unité de stockage tampon sont chacun supportés et déplacés avec l'une des pattes de distribution et déposés dans l'une des voies de stockage tampon de telle sorte que lesdits articles soient progressivement distribués dans la pluralité de pistes de stockage tampon vers l'unité d'accumulateur, dans lequel les articles correspondants sont saisis par l'une des pattes d'accumulation de telle sorte que les une ou plusieurs voies de sortie (192) d'articles soient reçues à l'extrémité de sortie.

2. Appareil de transport selon la revendication 1, dans lequel l'unité de distribution (140, 240) comprend un moyen de séparation (145, 245), par exemple une roue en étoile, configuré sur un côté proximal de la première piste en boucle fermée (142, 242), et adapté pour positionner au moins l'un des articles le long de l'une des pattes de distribution (144, 244) de telle sorte que l'article soit supporté par la patte de distribution correspondante, et déplacé avec celle-ci, sur la première piste en boucle fermée.

3. Appareil de transport selon la revendication 1 dans lequel l'unité de distribution (140, 240) comprend une unité d'alignement (146, 246) configurée sur un côté distal de la première piste en boucle fermée (142, 242), positionnée le long de la direction longitudinale de la première piste en boucle fermée, l'unité d'alignement comprenant une ou une pluralité de portes de distribution (147, 247) alignées chacune sur l'une des voies de stockage tampon (135, 235).

4. Appareil de transport selon la revendication 1, dans lequel l'unité d'accumulateur (150, 250) comprend une unité de guidage (156, 256) positionnée généralement parallèlement à une direction longitudinale du convoyeur de base (130, 230), l'unité de guidage comprenant une pluralité de portes d'accumulation (157, 257) alignées chacune sur l'une des voies de stockage tampon (135, 235) et adaptée pour recevoir les articles via celles-ci.

5. Appareil de transport selon la revendication 1, comprenant en outre une unité de groupement (160, 260, 300) s'étendant à distance de l'unité d'accumulateur, l'unité de groupement comprenant :
une seconde unité de distribution (340) adaptée pour distribuer une seule voie d'entrée d'articles reçus de l'unité de stockage tampon (120, 220), la seconde unité de distribution comprenant :
une troisième piste en boucle fermée (342) comprenant une pluralité de secondes pattes de distribution (344) configurées de manière à pouvoir se déplacer sur celle-ci ;
la seconde unité de distribution (340) configurée sur un côté distal de la troisième piste en boucle fermée, positionnée généralement de manière excentrée par rapport au convoyeur de base (130, 230) et généralement parallèle à une direction longitudinale de la troisième piste en boucle fermée (342), la seconde unité de distribution comprenant une pluralité de secondes portes de distribution (147) fournissant chacune une sortie vers l'une d'une pluralité de voies de distribution sur le convoyeur de base ;
une paire de voies de groupement parallèles (360) s'étendant à partir de la troisième piste en boucle fermée, positionnées chacune d'un côté du convoyeur de base, la paire de voies de groupement parallèles comprenant une pluralité de paires d'éléments mobiles de groupement (362), chaque paire d'éléments mobiles de groupement étant reliée par une barre longitudinale (364) ;
dans lequel, lorsque la voie unique des articles est reçue au niveau de l'unité de groupement (160, 260, 300), les articles sont d'abord répartis en de multiples voies sur les voies de distribution du convoyeur de base entre la paire de pistes parallèles, dans lequel en outre la pluralité d'éléments mobiles de groupement sont déplacés de telle manière qu'au moins l'une des barres longitudinales (360) agisse comme une barre avant et au moins l'une des autres barres longitudinales (364) agisse comme une barre arrière de sorte à former un groupe d'articles ayant un agencement prédéterminé entre eux.

6. Appareil de transport selon la revendication 1, dans lequel la première unité de distribution comprend une pluralité d'éléments mobiles de distribution (272), chacun venant en contact avec l'une des pattes de distribution (144, 244) pour permettre un mouvement longitudinal des ceux-ci sur la première piste en boucle fermée correspondante (142, 242).

7. Appareil de transport selon la revendication 1, dans lequel l'unité d'accumulateur (150, 250) comprend une pluralité d'éléments mobile d'accumulation (277), chacun venant en contact avec l'une des pattes d'accumulation (154, 254) pour permettre un mouvement longitudinal de ceux-ci sur la deuxième piste en boucle fermée correspondante (152, 252).

8. Appareil de transport selon la revendication 1, dans lequel chacune des pattes, incluant les pattes de distribution (144, 244) et / ou les pattes d'accumulation (154, 254) ont une forme et / ou une taille adaptées pour supporter de manière mobile l'article en mouvement dans une direction de son déplacement, au moins partiellement au niveau d'une surface de contact de celui-ci.

9. Appareil de transport selon la revendication 1, dans lequel l'unité d'alignement (146, 246) est une structure de déviation présentant une pluralité de portes d'alignement configurées horizontalement (147, 247), alignées chacune sur l'une des voies de stockage tampon (135, 235) et configurées de telle manière que l'article passe à une porte suivante uniquement lorsqu'une voie de stockage tampon vers une précédente porte est complètement remplie en raison de la position excentrée de la première piste en boucle fermée (142, 242) et de l'unité d'alignement.

10. Appareil de transport selon la revendication 1, dans lequel l'unité d'accumulateur (150, 250) est une structure de déviation présentant une pluralité de portes d'accumulation configurées horizontalement (247, 257), alignées chacune sur l'une des voies de stockage tampon (135, 235) et configurées de telle manière que l'article soit reçu de chacune des voies de stockage tampon de sorte à être accumulé dans au moins une voie, dans lequel, en outre, les voies de stockage tampon sont vidées progressivement, en commençant depuis les dernières voies vers la première voie, en raison de la position excentrée de la deuxième piste en boucle fermée (152, 252) et de l'unité d'accumulateur.

11. Appareil de transport selon la revendication 9 ou 10, dans lequel la structure de déviation est réalisée sous la forme d'une barre longitudinale (364a, 364b) présentant une pluralité de branches espacées formant les portes d'alignement (147, 247) /d'accumulation respectives (247, 257), chaque branche étant alignée sur une voie de stockage tampon de la pluralité de voies de stockage tampon (135, 235).

12. Appareil de transport selon la revendication 1 comprend en outre une unité de commande pour optimiser le mouvement de chacun des pistes de groupement parallèles, du convoyeur de base (130, 230), de la pluralité d'éléments mobiles (272, 277, 372, 362) et donc des articles en mouvement.
